Europäisches Patentamt

(19) European Patent Office

Office européen des brevets

(11) Publication number: **0 056 905**
**B1**

## (12) EUROPEAN PATENT SPECIFICATION

(45) Date of publication of patent specification: **03.04.85**

(51) Int. Cl.⁴: **F 02 B 77/08**, G 01 S 15/88

(21) Application number: **81306010.0**

(22) Date of filing: **21.12.81**

(54) **Method of and apparatus for detecting a piston ring in a piston engine.**

(30) Priority: **22.01.81 GB 8102004**

(43) Date of publication of application:
**04.08.82 Bulletin 82/31**

(45) Publication of the grant of the patent:
**03.04.85 Bulletin 85/14**

(84) Designated Contracting States:
**AT DE FR IT NL SE**

(56) References cited:
**EP-A-0 003 658**
**DE-B-2 517 751**
**GB-A-2 043 250**
**US-A-3 930 404**

(73) Proprietor: **FROUDE CONSINE LIMITED**
**Gregory's Bank**
**Worcester, WR3 8AD (GB)**

(72) Inventor: **Hitchcock, Keith Norman**
**2, Norton Close**
**Worcester (GB)**

(74) Representative: **Robinson, John Stuart et al**
**Marks & Clerk 57/60 Lincoln's Inn Fields**
**London WC2A 3LS (GB)**

Courier Press, Leamington Spa, England.

EP 0 056 905 B1

## Description

This invention relates to a method of detecting a piston ring in a piston engine, comprising moving a piston in a cylinder and examining a signal for a characteristic of the piston ring, and an apparatus for detecting a piston ring in a piston engine, comprising means for moving a piston in a cylinder and means for examining a signal for a characteristic of the piston ring. Such a method and apparatus may be used with, for instance, an internal combustion engine of petrol or diesel type.

DE—B—2 517 751 discloses a device for monitoring the piston rings mounted in a piston of internal combustion piston engine, each of which rings, consisting of magnetizable material, performs a particular stroke during the reciprocation of the internal combustion engine piston, in the region of which an electromagnetically scanning sensor is arranged on the internal combustion engine cylinder.

The cylinder bush is provided with a specially formed bore to receive the electromagnetically scanning sensor, which thus directly faces the piston rings as they pass, without intervening material.

According to a first aspect of the invention there is provided a method of detecting a piston ring in a piston engine, comprising moving a piston in a cylinder and examining a signal for a characteristic of the piston ring, characterised in that an ultrasonic beam is directed through a cylinder block of the engine towards the cylinder, so that said signal is a reflected or transmitted ultrasonic signal.

According to a second aspect of the invention there is provided an apparatus for detecting a piston ring in a piston engine, comprising means for moving a piston in a cylinder and means for examining a signal for a characteristic of the piston ring, characterised by an ultrasonic transducer for directing an ultrasonic beam through a cylinder block towards the cylinder, so that said signal is a reflected or transmitted ultrasonic signal.

The ultrasonic beam may be produced by the ultrasonic transducer being disposed in contact with one side of the cylinder block and a further ultrasonic transducer may be disposed in contact with the other side of the cylinder block to receive ultrasound transmitted through the cylinder. Alternatively, the ultrasonic transducer may be a single transducer disposed on one side of the cylinder block for transmitting the ultrasonic beam towards the cylinder and for receiving reflected ultrasound.

The piston is normally a clearance fit in the cylinder bore and is provided with annular piston rings which are seated in annular grooves of the piston and which are in intimate contact with cylinder bore to seal the chamber above the piston.

When the piston is moved in the cylinder through the ultrasonic beam, the clearance between the piston and the cylinder bore attenuates the ultrasound so that a signal of relatively small amplitude is transmitted or reflected. However, when a piston ring passes through the ultrasonic beam, the attenuation is relatively small because of the intimate contact between the ring and the cylinder bore, so that a signal of relatively large amplitude is transmitted or reflected. This signal which is characteristic of the piston ring can be readily detected so as to indicate the presence of the ring.

For instance, in the case of an internal combustion engine, each piston is normally provided with three piston rings. Thus, it is possible to detect the presence of the rings without having to dismantle the engine or check gases entering the crank case which might indicate leakage of combustion gases because of the absence of a ring. The three piston rings normally comprise two compression rings, disposed nearer the piston crown and of rectangular cross-section, followed by an oil control or scraper ring comprising an annular ring with an annular recess in its outer surface. The ultrasonic signal transmitted or reflected by the oil scraper ring as it passes through the ultrasonic beam thus has a form with two adjacent amplitude peaks and differs from the signal of the compression rings. It is thus possible to detect the presence of the oil scraper ring and to determine whether it is in its correct position in relation to the other rings on the piston.

Examination of the reflected or transmitted ultrasonic signals may be by electronic means such as an oscilloscope. For instance, the returned signals or the envelope thereof may be displayed on the oscilloscope screen so that peaks corresponding to the piston rings can be observed. The engine may be turned over or may be running normally during a test, and may be on a test stand or mounted in a vehicle. The oscilloscope may be a storage-type and may be triggered so as to store and display signals from a single upward movement of the piston through the ultrasonic beam.

The or each ultrasonic transducer may be arranged for attachment to the cylinder block in a readily detachable manner, so that the piston rings on all the pistons of a multi-cylinder engine can be checked quickly and easily.

The present method may be performed in addition to or in combination with the method disclosed in our copending EP—A—55120. For instance, one of the signals characteristic of one of the piston rings may be used in determining the predetermined position of the piston or crankshaft. The present method may be performed with the apparatus disclosed in the above-mentioned application.

The invention will be further described, by way of example, with reference to the accompanying drawings, in which:

Figure 1 is a part-sectional view of a cylinder and piston of an engine; and

Figure 2 is a cross-sectional view of a detail of Figure 1 to an enlarged scale.

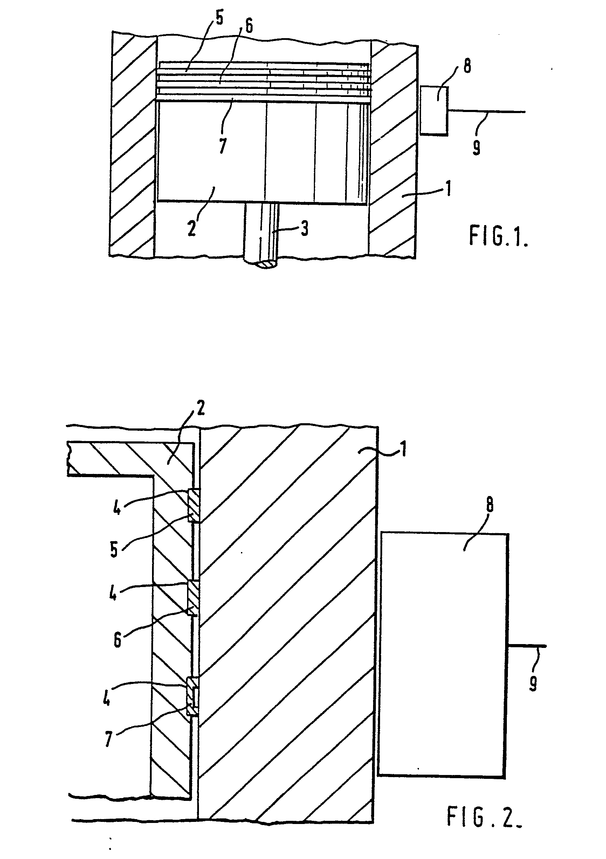

A method of detecting piston rings in a piston engine will be described in relation to an internal combustion engine as illustrated in the accompanying drawings. The engine comprises a cylinder block 1 having formed therein one or more cylinders. The cylinders may be lined by cylinder liners (not shown) in the conventional way. Each cylinder contains a piston 2 connected to the eccentric of a crankshaft (not shown) by a piston rod 3. The piston has adjacent its crown three annular recesses 4 in which are seated piston rings 5, 6 and 7. The piston rings 5 and 6 nearer the crown of the piston are compression rings whose purpose is essentially to provide a seal between the piston skirt and the cylinder bore so as to seal off the combustion chamber above the piston. The lowermost ring 7 in the drawings is an oil scraper ring whose purpose is to scrape oil from the cylinder bore for return to the crank-case or oil sump of the engine. Each of the piston rings 5 and 6 has a rectangular cross-section, where the cross-section of the oil scraper ring 7 has the form of a rectangle from which a rectangular portion has been removed on its outermost side. Thus, the oil scraper ring 7 has formed therein an annular recess. The oil scraper ring 7 thus contacts the cylinder bore at 2 annular surfaces spaced apart longitudinally of the piston by a short distance. This arrangement is illustrated in more detail in Figure 2, in which the various clearances have been greatly exaggerated for the purpose of illustration.

An ultrasonic transducer 8 is shown disposed against one side of the cylinder block 1 in contact therewith. In order to improve the contact between the transducer 8 and the cylinder block 1, a fluid suitable for propagating ultrasonic waves with relatively little attenuation may be used between the cylinder block and transducer. The transducer 8 is connected by a lead 9 to apparatus (not shown) for processing signals from the transducer 8.

In order to perform a method constituting a preferred embodiment of the present invention, the transducer 8 is placed against the cylinder block 1 as shown in the drawings and as described above. It is then energized so as to produce a beam of ultrasonic radiation and to direct this towards the adjacent cylinder. The beam may be modulated or pulsed. The ultrasonic beam is propagated through the solid cylinder block 1 and through a cylinder liner (where provided) in intimate contact therewith with relatively little attenuation. When the ultrasonic beam reaches the cylinder bore in the absence of the piston in line with the beam, the ultrasonic radiation is transmitted into the cylinder and a relatively small portion is reflected back towards the transducer 8. The reflected radiation is received by the transducer 8 and is converted into corresponding electrical signals supplied via the lead 9 to the apparatus for processing of the signals.

For the purposes of the method, the engine may remain installed in a vehicle and may be started and allowed to run normally. Alternatively, the engine may be mounted in a test stand and may be connected up to the appropriate services to allow it to run normally. If desired, the crankshaft of the engine may be rotated by some other means without allowing the engine to run. According to another possibility, in the case of a compression-ignition or diesel engine, a source of compressed air may be connected to the fuel inlet of the engine so as to cause the crankshaft to rotate.

When the piston 2 moves across the ultrasonic beam through the cylinder, the clearance between the piston skirt and the cylinder bore is sufficient for still relatively little radiation to be reflected back to the transducer 8. However, when the piston rings pass through the ultrasonic beam, they cause a relatively large amount of the ultrasonic radiation to be reflected back to the transducer 8 because of their intimate contact with the cylinder bore. Thus, the amplitude of the signal provided by the transducer at the lead 9 increases substantially as each piston ring passes through the ultrasonic beam. The apparatus connected to the lead 9 processes this signal and provides an indication of the presence of the piston ring. For instance, an oscilloscope may be used to display the ultrasonic signal or its envelope. The oscilloscope may be of the storage type and may be arranged to store and display the signal on the lead 9 or the envelope thereof for a single upward passage of the piston 1 through the ultrasonic beam. Alternatively, in the case of an oscilloscope of the non-storage type, the oscilloscope may be triggered at a predetermined position of each upward stroke of the piston 2.

Because the oil scraper ring 7 has two annular surfaces in intimate contact with the cylinder bore, the increase in amplitude of the returned ultrasonic signal has two peaks corresponding to passage of the oil scraper ring 7 through the beam. This ring may therefore be clearly identified by the apparatus connected to the lead 9. The method may therefore be used to check that the correct number of rings has been provided on each piston, and to check that the oil scraper ring is in its correct position on the piston. The transducer 8 may be held manually against the cylinder block 1 adjacent the position of each cylinder of a multi-cylinder internal combustion engine, or may be provided with means for holding it in each such position, so that the piston rings of each piston of the engine can be checked quickly and easily. Thus, it is unnecessary to dismantle the engine in order to check the piston rings. Further, the rings may be checked directly by this method without requiring searching for secondary effects of an incorrect piston ring arrangement, such as the presence in the crank-case of combustion gases suggesting that one or more of the rings is missing. This method therefore provides a quick, inexpensive, and reliable method of checking piston rings of piston engines.

## Claims

1. A method of detecting a piston ring (5, 6, 7) in a piston engine, comprising moving a piston (2) in a cylinder and examining a signal for a characteristic of the piston ring (5, 6, 7), characterised in that an ultrasonic beam is directed through a cylinder block (1) of the engine towards the cylinder, so that said signal is a reflected or transmitted ultrasonic signal.

2. A method as claimed in claim 1, in which a first ultrasonic transducer for transmitting the ultrasonic beam is placed on one side of the cylinder block (1) and a second ultrasonic transducer for receiving ultrasonic signals transmitted through the cylinder by a piston ring (5, 6, 7) and the piston (2) is placed on the other side of the cylinder block (1).

3. A method as claimed in claim 1, in which an ultrasonic transducer (8) for transmitting the ultrasonic beam and for receiving ultrasonic signals reflected by a piston ring (5, 6, 7) is placed on one side of the cylinder block (1).

4. A method as claimed in any one of the preceding claims, in which the reflected or transmitted ultrasonic signals are examined for a peak in amplitude indicative of a piston ring (5, 6, 7).

5. A method as claimed in any one of claims 1 to 4 for checking the relative positions of said piston rings (5, 6, 7) and another piston ring (5, 6, 7), wherein said signal is examined for a characteristic of said other piston ring and wherein a relationship between the two characteristics is examined so as to determine the relative positions of the two piston rings.

6. A method as claimed in any one of the preceding claims, for checking the presence and relative positions of at least one piston ring (5, 6) of a first type and at least one piston ring (7) of a second type providing a characteristic signal different from that of the first type, the method comprising examining the ultrasonic signals for the order and presence of the characteristic signals of piston rings of the first and second types for a single stroke of the piston (2) in a predetermined direction with respect to the cylinder.

7. A method as claimed in claim 6, in which the second type of piston ring (7) is an oil scraper ring whose characteristic signal is a double peak in the amplitude of ultrasonic signals.

8. A method as claimed in any one of the preceding claims, in which the ultrasonic beam is pulsed.

9. An apparatus for detecting a piston ring (5, 6, 7) in a piston engine, comprising means for moving a piston (2) in a cylinder and means for examining a signal for a characteristic of the piston ring (5, 6, 7), characterised by an ultrasonic transducer (8) for directing an ultrasonic beam through a cylinder block (1) towards the cylinder, so that said signal is a reflected or transmitted ultrasonic signal.

10. An apparatus as claimed in claim 9, in which the ultrasonic transducer is arranged to be placed on one side of the cylinder block (1) and a further ultrasonic transducer is arranged to be placed on the other side of the cylinder block (1) for receiving ultrasonic signals transmitted through the cylinder by a piston ring (5, 6, 7) and the piston (2).

11. An apparatus as claimed in claim 9, in which the ultrasonic transducer (8) is arranged to be placed on one side of the cylinder block (1) and is arranged to receive ultrasonic signals reflected by a piston ring (5, 6, 7).

12. An apparatus as claimed in any one of claims 9 to 11, in which the examining means is arranged to indicate a peak in amplitude of the ultrasonic signals indicative of a piston ring (5, 6, 7).

13. An apparatus as claimed in any one of claims 9 to 12, in which the examining means is arranged to examine the ultrasonic signals for a single stroke of the piston (2) in a predetermined direction with respect to the cylinder.

14. An apparatus as claimed in any one of claims 9 to 13, in which the examining means comprises an oscilloscope.

15. An apparatus as claimed in claim 14 when dependent on claim 13, in which the oscilloscope is a storage oscilloscope arranged to be triggered at the start of the single piston stroke.

16. An apparatus as claimed in any one of claims 9 to 15, in which the means for moving the piston (2) comprises the engine.

17. An apparatus as claimed in any one of claims 9 to 15, in which the engine is of the compression-ignition type and the means for moving piston (2) comprises a source of compressed air connected to a fuel inlet of the engine.

## Patentansprüche

1. Verfahren zum Nachweisen von Kolbenringen (5, 6, 7) in Kolbenmaschinen, mit dem ein sich in einem Zylinder bewegender Kolben anhand eines für die Eigenschaften des Kolbenringes (5, 6, 7) stehenden Prüfsignales untersucht wird, dadurch gekennzeichnet, daß durch einen Zylinderblock (1) der Maschine ein Ultraschallstrahl derart auf den Zylinder gerichtet und geführt wird, daß es sich bei dem zuvor angeführten Prüfsignal um ein reflektiertes oder übertragenes Ultraschallsignal handelt.

2. Verfahren nach Anspruch 1, dadurch gekennzeichnet, daß von einem Ultraschallsender an der einen Seite des Zylinderblockes (1) ein Ultraschallstrahl abgegeben wird, dessen durch den Zylinder von einem Kolbenring (5, 6, 7) und vom Kolben (2) weitergeleitete Ultraschallsignale von einem Ultraschallempfänger auf der anderen Seite des Zylinderblockes (1) empfangen werden.

3. Verfahren nach Anspruch 1, dadurch gekennzeichnet, daß zum Aussenden des Ultraschallstrahles und zum Empfangen der von einem Kolbenring (5, 6, 7) reflektierten Ultraschallsignale ein Ultraschallgeber/-empfänger (8) an einer Seite des Zylinderblockes (1) angeordnet wird.

4. Verfahren nach irgendeinem der vorhergehenden Ansprüche, dadurch gekennzeichnet, daß die reflektierten oder übertragenen Ultraschallsignale auf eine für einen Kolbenring (5, 6, 7) stehende Amplitudenspitze hin untersucht und überprüft werden.

5. Verfahren nach einem der Ansprüche 1 bis 4 zum Kontrollieren der jeweils zutreffenden Relativpositionen des Kolbenrings (5, 6, 7) und eines anderen Kolbenrings (5, 6, 7), dadurch gekennzeichnet, daß das vorerwähnte Signal für eine Eigenschaft des vorerwähnten anderen Kolbenringes untersucht und überprüft wird, und daß die Zuordnung der beiden Kolbenringeigenschaften zwecks Bestimmung der Positionen, welche die Kolbenringe zueinander einnehmen, untersucht und überprüft wird.

6. Verfahren nach einem der vorhergehenden Ansprüche zum Kontollieren des Vorhandenseins und der Relativpositionen von mindestens einem Kolbenring (5, 6) einer ersten Ausführung und mindestens einem Kolbenring (7) einer zweiten Ausführung, dadurch gekennzeichnet, daß für die zweite Ausführung ein gegenüber dem für die erste Ausführung unterschiedliches charakteristisches Signal erzeugt wird, wobei die Ultraschallsignale auf Reihenfolge und Vorhandensein der für die Kolbenringe der ersten Ausführung und der zweiten Ausführung charakteristischen Signale für einen einzigen Hub des Kolbens (2) in einer zum Zylinder vorgegebenen Richtung untersucht und überprüft werden.

7. Verfahren nach Anspruch 6, dadurch gekennzeichnet, daß es sich bei dem Kolbenring (7) der zweiten Ausführung um einen Ölabstreifring handelt, dessen charakteristisches Signal eine Doppelspitze oder ein Doppelzacken in der Amplitude der Ultraschallsignale ist.

8. Verfahren nach einem der vorhergehenden Ansprüche, dadurch gekennzeichnet, daß der Ultraschallstrahl gepulst wird.

9. Vorrichtung zum Nachweisen von Kolbenringen (5, 6, 7) in einer Kolbenmaschine, die mit einer Vorrichtung zum Bewegen eines Kolbens und mit einer weiteren Vorrichtung zum Kontrollieren und Überprüfen eines für den Kolbenring (5, 6, 7) charakteristischen Signales versehen ist, gekennzeichnet durch einen Ultraschallsender, der einen Ultraschallstrahl durch einen Zylinderblock auf den Zylinder richtet, so daß vorerwähntes Signal als reflektiertes oder weitergeleitetes Ultraschallsignal entsteht.

10. Vorrichtung nach Anspruch 9, dadurch gekennzeichnet, daß der Ultraschallsender auf einer Seite des Zylinderblockes (1) und ein weiterer Ultraschallempfänger auf der anderen Seite des Zylinderblockes (1) angeordnet wird, wobei dieser Ultraschallempfänger die von einem Kolbenring (5, 6, 7) und vom Kolben (2) weitergeleiteten Ultraschallsignale empfängt und aufnimmt.

11. Vorrichtung nach Anspruch 9, dadurch gekennzeichnet, daß der Ultraschallgeber (8) für eine Anordnung auf einer Seite des Zylinderblockes (1) und zugleich zum Empfang der von einem Kolbenring (5, 6, 7) reflektierten Ultraschallsignale ausgebildet ist.

12. Vorrichtung nach einem Ansprüche 9 bis 11, gekennzeichnet durch eine Ausbildung der Prüfvorrichtung für die Anzeige einer einen Kolbenring (5, 6, 7) anzeigenden Amplitudenspitze des Ultraschallsignals.

13. Vorrichtung nach einem der Ansprüche 9 bis 12, gekennzeichnet durch die Ausbildung der Prüfvorrichtung für die Anzeige von Ultraschallsignalen für eine einzige Hubbewegung des Kolbens (2) in einer in Bezug zum Zylinder vorgegebenen Richtung.

14. Vorrichtung nach einem der Ansprüche 9 bis 13, dadurch gekennzeichnet, daß die Prüfvorrichtung mit einem Oszilloskopen versehen ist.

15. Vorrichtung nach Ansprüche 14, in Verbindung mit Anspruch 13, dadurch gekennzeichnet, daß der Oszilloskop ein speichernder Oszilloskop ist, der beim Start der Einzelhubbewegung des Kolbens getriggert wird.

16. Vorrichtung nach einem der Ansprüche 9 bis 15, dadurch gekennzeichnet, daß die Maschine als Vorrichtung für die Bewegung des Kolbens (2) herangezogen wird.

17. Vorrichtung nach einem der Ansprüche 9 bis 15, dadurch gekennzeichnet, daß die Maschine als ein Kompressionszündungsmotor ausgeführt ist und als Vorrichtung zur Herbeiführung der Bewegung des Kolbens (2) Druckluft Anwendung findet, die an den Brennstoffeinlaß des Motors angeschlossen ist.

**Revendications**

1. Un procédé détection d'un segment de piston (5, 6, 7) dans un moteur à piston, comprenant le déplacement d'un piston (2) dans un cylindre et l'examen d'un signal pour rechercher une caractéristique du segment de piston (5, 6, 7), caractérisé en ce qu'un faisceau d'ultrasons est dirigé à travers un bloc cylindre du moteur en direction du cylindre de telle manière que ledit signal est un signal ultrasonore réféchi ou transmis.

2. Un procédé comme revendiqué dans la revendication 1, dans lequel un premier transducteur ultrasonore destiné à transmettre le faisceau d'ultrasons est placé sur un côté du bloc cylindre (1) et un second transducteur ultrasonore destiné à reçevoir des signaux ultrasonores transmis à travers le cylindre par un segment de piston (5, 6, 7) et le piston (2) est placé sur l'autre côté du bloc cylindre (1).

3. Un procédé comme revendiqué dans la revendication 1, dans lequel un transducteur ultrasonore (8) destiné à transmettre le faisceau d'ultrasons et à recevoir des signaux ultrasonores réfléchis par un segment de pistons (5, 6, 7) est placé sur un côté du bloc cylindres (1).

4. Un procédé comme revendiqué dans l'une quelconque des revendications précédentes, dans lequel les signaux ultrasonores réfléchis ou transmis sont examinés pour rechercher une crête en amplitude indiquant un segment de piston (5, 6, 7).

5. Un procédé comme revendiqué dans l'une quelconque des revendications 1 à 4, pour vérifier les positions relatives dudit segments de piston (5, 6, 7) et d'un autre segment de piston (5, 6, 7), dans lequel ledit signal est examiné pour rechercher une caractéristique dudit autre segment de piston et dans lequel une relation entre les deux caractéristiques est recherchée de à déterminer les positions relatives des deux segments de piston.

6. Un procédé comme revendiqué dans l'une quelconque des revendications précédentes, pour vérifier la présence et les positions relatives d'au moins un segment de piston (5, 6) d'un premier type et au moins un segment de piston (7) d'un second type fournissant un signal caractéristique différent de celui du premier type, le procédé comprenant l'examen des signaux ultrasonores pour rechercher l'ordre et la présence des signaux caractéristiques des segments de piston des premier et second type pendant une seule course du piston (2) dans une direction prédéterminée par rapport au cylindre.

7. Un procédé comme revendiqué dans la revendication 6, dans lequel le second type de segment de piston (7) est un segment râcleur d'huile dont le signal caractéristique est une double crête en amplitude des signaux ultrasonores.

8. Un procédé comme revendiqué dans l'une quelconque des revendications précédentes, dans lequel le faisceau d'ultrasons est pulsé.

9. Un appareil pour détecter un segment de piston (5, 6, 7) dans un moteur à piston, comprenant des moyens pour déplacer un piston (2) dans un cylindre et des moyens pour examiner un signal pour rechercher une caractéristique du segment de piston (5, 6, 7), caractérisé par un transducteur ultrasonore (8) destiné à diriger un faisceau d'ultrasons à travers un bloc cylindre (1) en direction du cylindre, de telle manière que ledit signal est un signal ultrasonore réfléchi ou transmis.

10. Un appareil comme revendiqué dans la revendication 9, dans lequel le transducteur ultrasonore est disposé pour être placé sur un côté du bloc cylindre 1 et un autre transducteur ultrasonore est disposé pour être placé sur l'autre côté du bloc cylindre pour recevoir des signaux ultrasonores transmis à travers le cylindre par un segment de piston (5, 6, 7) et le piston (2).

11. Un appareil comme revendiqué dans la revendication (9), dans lequel le transducteur ultrasonore (8) est disposé pour être placé sur un côté du bloc cylindre et est disposé pour recevoir des signaux ultrasonores réfléchis par un segment de piston (5, 6, 7).

12. Un appareil comme revendiqué dans l'une quelconque des revendications 9 à 11, dans lequel les moyens d'examen sont disposés pour indiquer une crête en amplitude des signaux ultrasonores significative d'un segment de piston (5, 6, 7).

13. Un appareil comme revendiqué dans l'une quelconque des revendications 9 à 12, dans lequel les moyens d'examen sont disposés pour examiner les signaux ultrasonores pendant une seule course du piston (2) dans une direction prédéterminée par rapport au cylindre.

14. Un appareil comme revendiqué dans l'une quelconque des revendications 9 à 13, dans lequel les moyens d'examen comprennent un oscilloscope.

15. Un appareil comme revendiqué dans la revendication (14) lorsqu'elle dépend de la revendication (13) dans lequel l'oscilloscope est un oscilloscope à mémoire disposé pour être déclenché au début de la course unique du piston.

16. Un appareil comme revendiqué dans l'une quelconque des revendications 9 à 15, dans lequel les moyens pour déplacer le piston (2) comprennent le moteur.

17. Un appareil comme revendiqué dans l'une quelconque des revendications 9 à 15, dans lequel le moteur est du type à compression-allumage et les moyens pour déplacer le piston (2) comprennent une source d'air comprimé relié à une entrée de combustible du moteur.

FIG.1.

FIG.2.